# EUROPEAN PATENT APPLICATION

(11) **EP 4 714 705 A1**
(43) Date of publication of application: **25.03.2026**
(21) Application number: 23938360.7
(22) Date of filing: 19.05.2023
(51) Int. Cl.: B60K 6/40

(54) **ELECTRIC VEHICLE**

(71) Applicant: Nissan Motor Co., Ltd., Yokohama-shi, Kanagawa 221-0023 (JP)
(72) Inventor: NAKAGAWA, Kenichi, Atsugi-shi, Kanagawa 243-0123 (JP)
(74) Representative: Global IP Europe Patentanwaltskanzlei
(86) International application number: PCT/JP2023/018787
(87) International publication number: WO 2024/241385

(57) **Abstract**

An electric vehicle equipped with a rotary electric machine, an inverter, and a radiator is provided. In this electric vehicle, the inverter is disposed above the rotary electric machine, and the radiator is disposed in front of the inverter. Between the inverter and the radiator, a refrigerant pipe made of metal and having a circular cross section extends in the width direction of the vehicle. The inverter' s case has a chamfered portion formed by chamfering a corner located at the front upper side of the electric vehicle. The radiator includes a fan that rotates about a rotation shaft, and this fan is positioned forward of the refrigerant pipe so that its rotation shaft extends in the front-rear direction of the electric vehicle.

## Description

### TECHNICAL FIELD

The present invention relates to an electric vehicle.

### BACKGROUND ART

An electric vehicle is equipped with an inverter (power conversion device) with a built-in high voltage circuit, but when a fan motor or the like of a radiator interferes with a front surface of an inverter case during a collision or the like of the vehicle, the inverter case may be damaged and an emergency stop (ES) may occur. When the fan motor of the radiator is damaged due to interference with the inverter case, abnormal ignition (TI) may occur due to a short circuit.

JP5712956B2 discloses an electric vehicle including a bracket that fixes a case of a power conversion device to a fixed structure of the vehicle. In this electric vehicle, the bracket is provided with a bending start portion that is bent and deformed, and the bracket is bent during a frontal collision of the vehicle to absorb collision energy acting on the case of the power conversion device. Accordingly, a damage to the case of the power conversion device during a collision of the vehicle is prevented.

### SUMMARY OF INVENTION

However, even in the electric vehicle described in the JP5712956B2, when the fan motor or the like of the radiator having high rigidity interferes with the power conversion device during a collision of the vehicle, the case of the power conversion device may be damaged. The fan motor of the radiator may also be damaged due to interference with the power conversion device.

The present invention has been made in view of the above problems, and an object of the present invention is to provide an electric vehicle that prevents emergency stop (ES) and abnormal ignition (TI) during a collision of the vehicle.

One aspect of the present invention provides an electric vehicle including a rotary electric machine, an inverter, and a radiator. In the electric vehicle, the inverter is disposed above the rotary electric machine, the radiator is disposed in front of the inverter in the electric vehicle, and a refrigerant pipe made of metal and having a circular cross section is disposed between the inverter and the radiator and extends in a width direction of the electric vehicle. A case of the inverter has a chamfered portion formed by chamfering a corner portion positioned at a front upper portion of the electric vehicle, and the radiator includes a fan that rotates around a rotation shaft, and the fan is disposed such that the rotation shaft extends in a front-rear direction of the electric vehicle at a position in front of the refrigerant pipe.

### BRIEF DESCRIPTION OF DRAWINGS

[FIG. 1] FIG. 1 is a schematic configuration diagram illustrating a main configuration of a vehicle front portion of an electric vehicle according to an embodiment of the present invention.
[FIG. 2] FIG. 2 is a schematic diagram of an electric power train.
[FIG. 3] FIG. 3 is a top perspective view of a case.
[FIG. 4] FIG. 4 is a diagram illustrating fixing points on an upper surface of the case.
[FIG. 5] FIG. 5 is an enlarged diagram illustrating the fixing points on the upper surface of the case.
[FIG. 6] FIG. 6 is a diagram illustrating a connection part between a chamfered portion and a front surface of the case.

### DESCRIPTION OF EMBODIMENTS

Hereinafter, an embodiment of the present invention will be described with reference to the drawings and the like.

### [Embodiment]

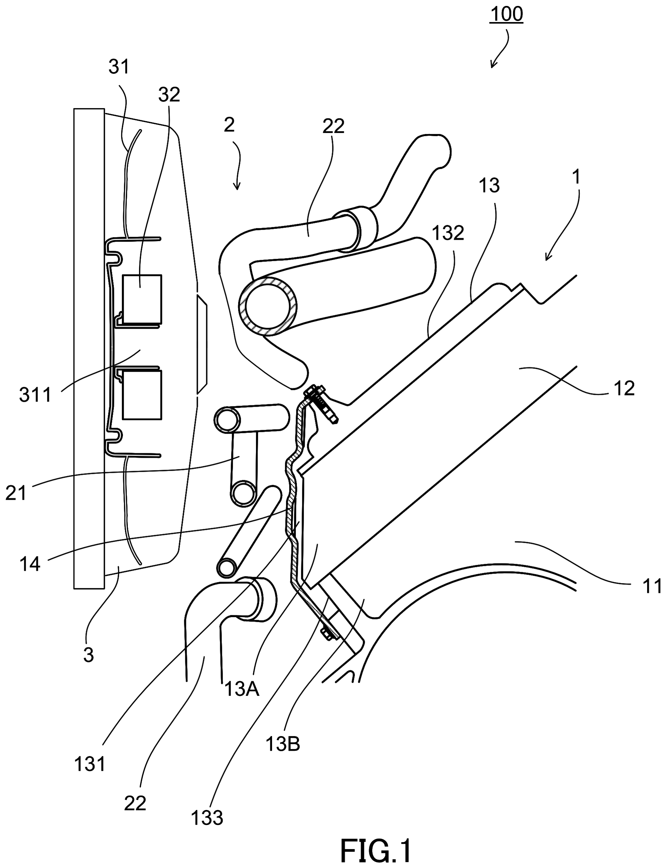

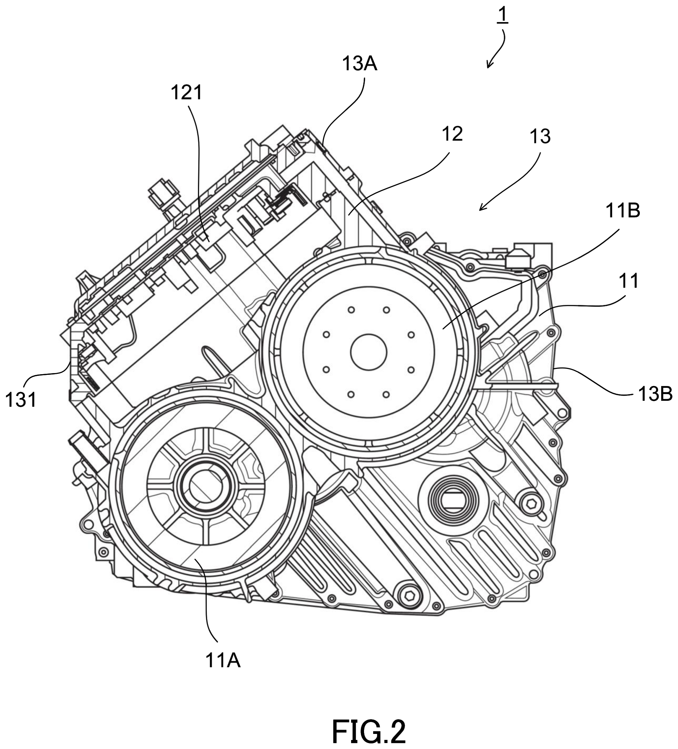

FIG. 1 is a schematic configuration diagram illustrating a main configuration in a vehicle front portion of an electric vehicle 100 according to an embodiment of the present invention, and is a cross-sectional view of the electric vehicle 100 as viewed from a vehicle width direction. FIG. 2 is a schematic diagram of an electric power train (hereinafter, referred to as an ePT) 1 mounted on the electric vehicle 100, and is a cross-sectional view of the ePT 1 as viewed from the vehicle width direction of the electric vehicle 100. Note that the electric vehicle 100 of the present embodiment is a so-called series hybrid vehicle including a generator (power generation motor) that is driven by an engine (not illustrated) to generate electric power and an electric motor (drive motor) that is driven by electric power from a battery (not illustrated) to cause the electric vehicle 100 to travel.

As illustrated in FIG. 1, the electric vehicle 100 includes the electric power train (hereinafter referred to as ePT) 1, a refrigerant pipe 2, and a radiator 3.

As illustrated in FIG. 2, the ePT 1 includes a rotary electric machine 11, an inverter (power conversion device) 12 disposed above the rotary electric machine 11, and a case 13 that accommodates the rotary electric machine 11 and the inverter 12. The ePT 1 receives supply of the electric power from the battery (not illustrated) and drives an electric motor (drive motor) 11B of the rotary electric machine 11 to cause the electric vehicle 100 to travel.

The rotary electric machine 11 includes a generator 11A and the electric motor 11B. The generator 11A is an electric power generation motor driven by an engine (not illustrated) to generate electric power, and is, for example, a three-phase motor. The electric motor 11B is a drive motor that is driven by receiving supply of the electric power from the battery (not illustrated) and rotates drive wheels via an axle of the electric vehicle 100, and is, for example, a three-phase motor. The electric motor 11B is rotated by the drive wheels during deceleration and the like of the electric vehicle 100, and generates regenerative electric power. That is, the electric motor 11B also functions as a generator.

The inverter 12 includes electrical components 121 including a power module, a capacitor, and the like, and an inverter housing 13A constituting a part of the case 13 described below, and has a built-in high voltage circuit. The inverter 12 is disposed above the rotary electric machine 11 in a state of being inclined downward toward a front side of the electric vehicle 100. The inverter 12 is electrically connected to the rotary electric machine 11 (the generator 11A and the electric motor 11B), converts DC electric power output from the battery into AC electric power, supplies the AC electric power to the electric motor 11B, and drives the electric motor 11B. The inverter 12 converts the electric power generated by the generator 11A and the regenerative electric power from the electric motor 11B from AC electric power to DC electric power and supplies the DC electric power to the battery to charge the battery.

The case 13 is made of metal such as aluminum, has a substantially rectangular shape, and accommodates the rotary electric machine 11 (the generator 11A and the electric motor 11B) and the inverter 12. The case 13 includes the lid-like inverter housing 13A that opens toward a lower side and has an inner surface on which the electrical components 121 of the inverter 12 are disposed, and a rotary electric machine housing 13B that opens toward an upper side and accommodates the rotary electric machine 11 (the generator 11A and the electric motor 11B). A tip of an outer edge portion of the inverter housing 13A and a tip of an outer edge portion of the rotary electric machine housing 13B are abutted against and fixed to each other, so that the inverter housing 13A and the rotary electric machine housing 13B constitute one case 13.

The case 13 has a chamfered portion 131 formed by chamfering a corner portion positioned at an upper portion on the front side (hereinafter, also simply referred to as a front upper portion) of the electric vehicle 100.

Further, as illustrated in FIG. 1, the case 13 is provided with a protector 14 that covers the chamfered portion 131 (note that FIG. 2 is a view of a state in which the protector 14 is removed). The protector 14 is made of an iron plate or the like, covers the chamfered portion 131, and is fixed to the case 13 on an upper surface 132 and a front surface 133 of the case 13. Note that details of a configuration of the case 13 will be described below.

The refrigerant pipe 2 is a refrigerant flow path through which a refrigerant for cooling the inverter 12 flows, and includes a metal pipe 21 made of metal and elastic pipes 22 made of an elastic material such as rubber.

The metal pipe 21 has a circular cross section, and is disposed to extend in the width direction of the electric vehicle 100 between the inverter 12 and the radiator 3, which will be described below and disposed in front of the inverter 12 in the electric vehicle 100 (hereinafter, also referred to as in front of the inverter 12).

The elastic pipes 22 are disposed above and below the metal pipe 21 in the electric vehicle 100.

The radiator 3 is disposed in front of the inverter 12 in the electric vehicle 100. The radiator 3 includes a refrigerant passage (not illustrated) connected to the refrigerant pipe 2 through which the refrigerant for cooling the inverter 12 flows, and cools the refrigerant flowing through the refrigerant passage by heat exchange or the like.

The radiator 3 includes an electric fan (radiator fan) 31 and a fan motor 32 that drives the fan 31 at a position facing the inverter 12.

The fan 31 is configured to rotate around a rotation shaft 311 extending in a front-rear direction of the electric vehicle 100. The fan 31 is disposed such that the rotation shaft 311 is positioned in front of the metal pipe 21 disposed between the inverter 12 and the radiator 3 in the electric vehicle 100 and at the same height as the metal pipe 21 or higher than the metal pipe 21. When the fan 31 rotates, cooling air is sucked into the radiator 3, and the radiator 3 is cooled. Note that the fan 31 is preferably disposed at a position of the height as described above, but is not limited thereto.

The fan motor 32 is a motor that drives the fan 31, and is disposed such that a motor shaft of the fan motor 32 coincides with the rotation shaft 311 of the fan 31. That is, the fan motor 32 is disposed at a position in front of and higher than the inverter 12.

As described above, the electric vehicle 100 includes the inverter 12 and the radiator 3 provided with the electric fan 31, and the radiator 3 is disposed in front of the inverter 12.

However, in the electric vehicle equipped with the inverter (power conversion device) with a built-in high voltage circuit and the radiator disposed in front of the inverter 12, the fan motor or the like of the radiator may interfere with a front surface of the case of the inverter during a collision or the like of the vehicle. Then, when the fan motor or the like having high rigidity interferes with the case of the inverter and the case of the inverter is damaged, an emergency stop (ES) may occur.

In the electric vehicle, the fan motor of the radiator is a component having large inrush power and large power consumption, and a power supply circuit is usually connected to a fusible link or the like having a relatively longer cutoff time than a fuse having excellent immediate disconnection performance. Therefore, when the fan motor of the radiator is damaged during a collision of the vehicle, an electric wire used in the circuit may be melted and damaged before the power supply circuit is cut off, leading to abnormal ignition (TI). That is, when the fan motor of the radiator is damaged due to a collision of the vehicle, the power supply circuit may be electrically short-circuited before being cut off, which may lead to abnormal ignition (TI).

In contrast, in the electric vehicle 100 of the present embodiment, the metal pipe (refrigerant pipe) 21 having a circular cross section is disposed to extend in the width direction of the electric vehicle 100 between the inverter 12 and the radiator 3 disposed in front of the inverter 12 in the electric vehicle 100. Therefore, even when the fan motor 32 of the radiator 3 interferes with the inverter 12 due to a collision or the like of the vehicle, the fan motor 32 first interferes with the metal pipe 21. Here, the metal pipe 21 is made of metal, and therefore is not broken as a rubber pipe. Since the metal pipe 21 has a circular cross section, the fan motor 32 can be moved to a rear side or an upper side of the electric vehicle in a slidable manner on the metal pipe 21. In the electric vehicle 100 of the present embodiment, the fan 31 of the radiator 3 is disposed at a position in front of the metal pipe 21 such that the rotation shaft 311 of the fan 31 extends in the front-rear direction of the electric vehicle 100. That is, the fan 31 (fan motor 32) of the radiator 3 is disposed at a position in front of and higher than the inverter 12. Further, in the electric vehicle 100 of the present embodiment, the corner portion at the front upper portion of the case 13 accommodating the inverter 12 is chamfered. That is, the case 13 has the chamfered portion 131 at the front upper portion thereof. As described above, the fan 31 of the radiator 3 is disposed at a position in front of and higher than the inverter 12, and the case 13 accommodating the inverter 12 has the chamfered portion 131 at the front upper portion thereof. Accordingly, when the fan motor 32 of the radiator 3 interferes with the inverter 12 due to a collision or the like of the vehicle, the fan motor 32 interferes with the chamfered portion 131 of the case 13 and moves to the rear side or the upper side of the electric vehicle 100 in a slidable manner on the upper surface 132 of the case 13 from the chamfered portion 131. As described above, in the electric vehicle 100 of the present embodiment, during a collision or the like of the vehicle, the fan motor 32 first interferes with the metal pipe 21, interferes with the chamfered portion 131 of the case 13 from above the metal pipe 21, and further moves to the rear side or the upper side of the electric vehicle 100 in a slidable manner on the upper surface 132 of the case 13. Therefore, collision energy generated when the fan motor 32 interferes with the case 13 of the inverter 12 can be reduced, and damage to the case 13 of the inverter 12 and the fan motor 32 can be prevented. Therefore, it is possible to prevent emergency stop (ES) and abnormal ignition (TI) during a collision of the vehicle.

Hereinafter, the configuration of the case 13 that accommodates the rotary electric machine 11 and the inverter 12 will be described in detail.

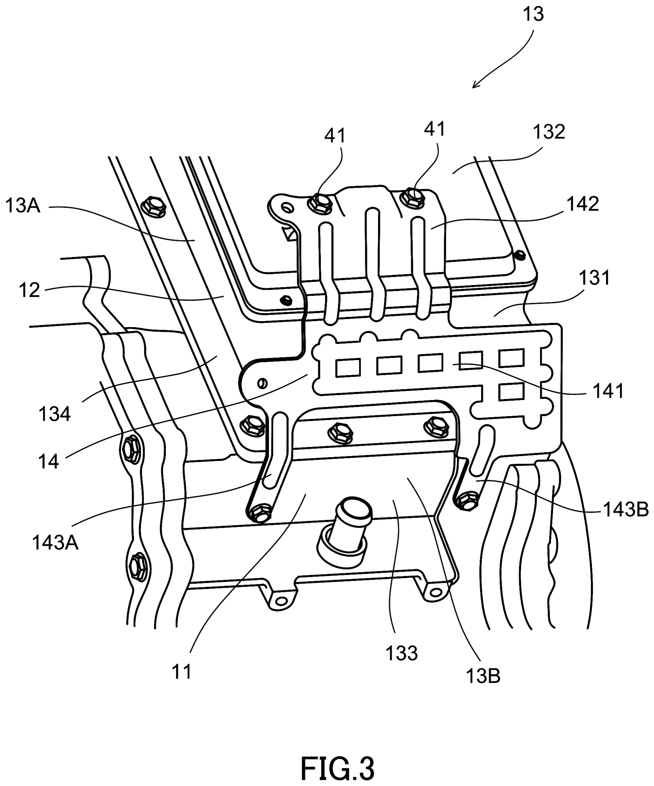

FIG. 3 is a top perspective view of the case 13.

As described above, the case 13 includes the lid-like inverter housing 13A that has the inner surface on which the electrical components 121 of the inverter 12 are disposed, and the rotary electric machine housing 13B that opens toward the upper side and accommodates the rotary electric machine 11 (the generator 11A and the electric motor 11B). A flange 134 is formed at the tip of the outer edge portion of the inverter housing 13A, and the flange 134 and the tip of the outer edge portion of the rotary electric machine housing 13B are abutted against each other and fastened by bolts or the like. In this way, the inverter housing 13A and the rotary electric machine housing 13B constitute one case 13.

The case 13 has the chamfered portion 131 formed by chamfering the corner portion at the front upper portion of the electric vehicle 100. As described above, since the inverter 12 (inverter housing 13A) is disposed above the rotary electric machine 11 in a state of being inclined downward toward the front side of the electric vehicle 100, a surface of the chamfered portion 131 faces the radiator 3 (see FIG. 1). Accordingly, when the fan motor 32 of the radiator 3 interferes with the inverter 12 due to a collision or the like of the vehicle, the fan motor 32 interferes with the chamfered portion 131 and moves in a slidable manner on the upper surface 132 of the case 13 from the chamfered portion 131. That is, the collision energy generated when the fan motor 32 collides with the inverter 12 can be reduced, and the fan motor 32 can be moved to the rear side or the upper side of the electric vehicle 100. A collision stroke can be ensured by an amount corresponding to chamfering of the case 13.

The protector 14 is attached to the case 13 so as to cover the chamfered portion 131.

The protector 14 is made of an iron plate or the like, and includes a main body portion 141 above the chamfered portion 131 of the case 13, an upper extension portion 142 extending toward the upper surface 132 of the case 13, and two lower extension portions 143A and 143B extending toward the front surface 133 of the case 13. The main body portion 141 of the protector 14 extends in the width direction of the electric vehicle 100 above the chamfered portion 131 of the case 13. The upper extension portion 142 of the protector 14 extends upward from the main body portion 141, and a tip portion thereof is bent toward the upper surface 132 of the case 13. The extension portion 142 is fixed to the case 13 at a plurality of fixing points 41 on the upper surface 132 of the case 13. That is, the protector 14 covers the chamfered portion 131 and a corner portion where the chamfered portion 131 and the upper surface 132 of the case 13 are connected, and is fixed to the case 13 on the upper surface 132 of the case 13. Since the protector 14 is attached so as to cover the chamfered portion 131 in this way, when the fan motor 32 of the radiator 3 interferes with the inverter 12 due to a collision or the like of the vehicle, the fan motor 32 interferes with the protector 14 and moves in a slidable manner from the chamfered portion 131 toward the upper surface 132 of the case 13. That is, the protector 14 further reduces the collision energy generated when the fan motor 32 interferes with the inverter 12.

The two lower extension portions 143A and 143B of the protector 14 extend toward the front surface 133 of the case 13. The two extension portions 143A and 143B are separated from each other in the width direction of the electric vehicle 100, and are fixed to the case 13 at the front surface 133 of the case 13. In this way, the protector 14 is fixed to the case 13 at the upper surface 132 and the front surface 133 of the case 13.

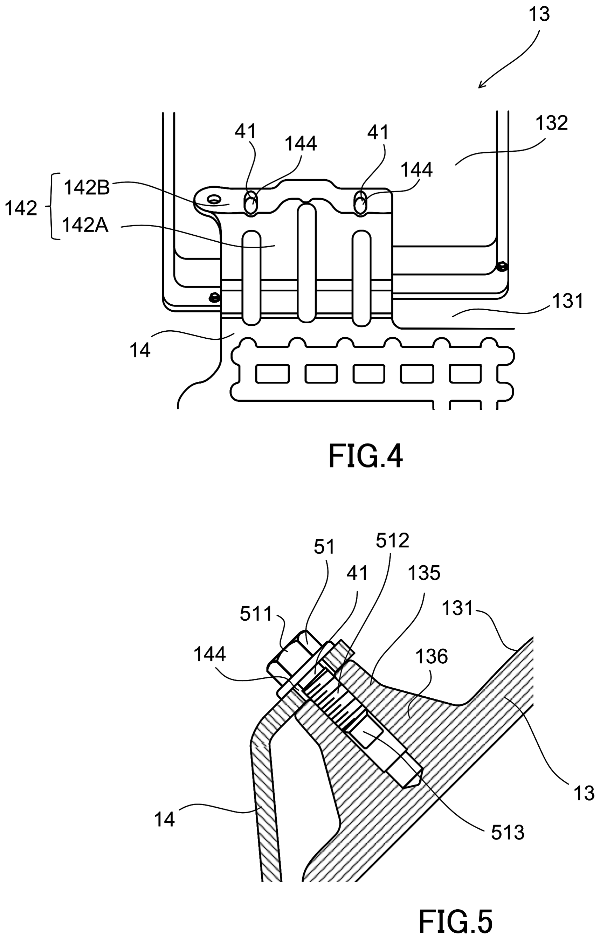

FIG. 4 is a diagram illustrating the fixing points 41 between the protector 14 and the case 13 on the upper surface 132 of the case 13.

As illustrated in FIG. 4, the upper extension portion 142 of the protector 14 includes a connection portion 142A extending upward and a tip portion 142B bent toward the upper surface 132 of the case 13. In the protector 14, the tip portion 142B of the extension portion 142 is fixed to the case 13 at the two fixing points 41 separated from each other on the upper surface 132 of the case 13. Note that FIG. 4 is a diagram illustrating a state in which a fixing member at the fixing point 41 is removed.

The tip portion 142B of the extension portion 142 of the protector 14 has a long hole 144 extending in the front-rear direction of the electric vehicle 100 at each of the fixing points 41 where the protector 14 and the case 13 are fixed to each other. The protector 14 is fixed to the case 13 via the long hole 144 by the fixing member such as a bolt. When the fan motor 32 of the radiator 3 interferes with the protector 14 and a load is applied to the protector 14 during a collision or the like of the vehicle, the load is applied to the fixing point 41 of the protector 14. Here, in the case where the protector 14 has the long hole 144 extending in the front-rear direction of the electric vehicle 100 at the fixing point 41, the protector 14 slides in the long hole 144. As a result, the protector 14 interferes with the corner portion where the chamfered portion 131 and the upper surface 132 of the case 13 are connected to each other in a side view of the electric vehicle 100, but the case 13 is not damaged even when interfering with the protector 14 since the corner portion of the case 13 has high rigidity. That is, by making the protector 14 slidable in the long hole 144 extending in the front-rear direction, the collision energy generated when the fan motor 32 interferes with the case 13 can be received by the corner portion of the case 13, and the case 13 can be prevented from being damaged. Since the fan motor 32 interferes with the case 13 via the protector 14, the collision energy is reduced, and damage to the fan motor 32 is prevented.

Note that, preferably, a dimension of the long hole 144 is set, by an experiment or the like, to an appropriate value within a range in which the collision energy generated when the fan motor 32 interferes with the case 13 can be received by the corner portion of the case 13.

Since the protector 14 is fixed to the case 13 at the two fixing points 41 separated from each other on the upper surface 132 of the case 13, the load applied to the fixing points 41 when the fan motor 32 interferes with the protector 14 is dispersed to two points. Therefore, the collision energy is further reduced.

FIG. 5 is an enlarged view of the fixing points 41 between the protector 14 and the case 13 on the upper surface 132 of the case 13.

As illustrated in FIG. 5, the case 13 includes a boss portion 135 protruding to the outside of the case 13 at each of the fixing points 41 on the upper surface 132. The protector 14 is fixed to the boss portion 135 by the bolt 51 via the long hole 144.

The bolt 51 that fixes the protector 14 to the case 13 includes a head portion 511, a tapped screw portion 512, and a tip portion (pilot) 513. The bolt 51 fixes the protector 14 to the boss portion 135 by the screw portion 512 meshing with the boss portion 135 of the case 13.

The boss portion 135 protrudes to the outside of the case 13 and includes a rib 136 on a root side thereof. The rib 136 is provided from a position at the same height as the tip portion 513 of the bolt 51 or at a height higher than the tip side of the bolt 51 toward the upper surface 132 of the case 13 in a state in which the screw portion 512 meshes with the boss portion 135. As described above, when the fan motor 32 interferes with the protector 14 due to a collision or the like of the vehicle, a load is applied to the fixing points 41 of the protector 14. In this case, the case 13 (boss portion 135) is broken at a portion of the boss portion 135 that does not include the rib 136 and near the tip portion 513 of the bolt 51 that is not supported by the bolt 51 and has low rigidity. As a result, stress generated at the root portion of the boss portion 135 can be reduced, and damage to a portion connected to the inside of the case 13 can be prevented. As described above, the case 13 is provided with the rib 136 at the same height as the tip portion 513 of the bolt 51 or at a height closer to the upper surface 132 of the case 13 than the tip portion 513 in a state in which the screw portion 512 meshes with the boss portion 135, and therefore that the case 13 can be further prevented from being damaged.

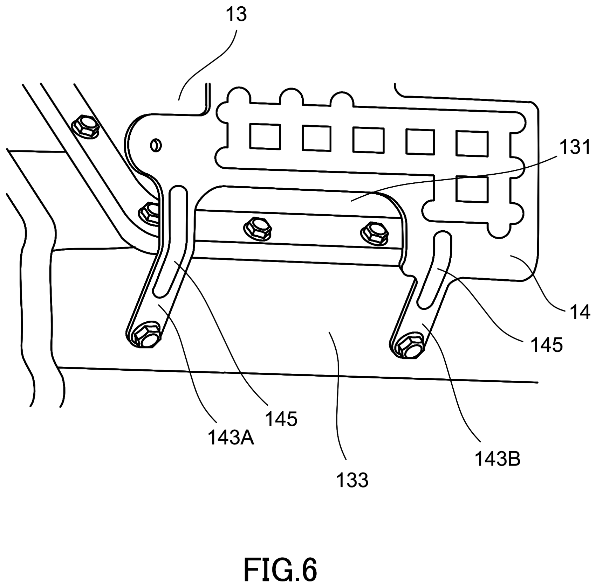

FIG. 6 is a diagram illustrating a connection part between the chamfered portion 131 and the front surface 133 of the case 13.

As described above, the protector 14 includes the two lower extension portions 143A and 143B extending from the chamfered portion 131 of the case 13 toward the front surface 133. The extension portions 143A and 143B are separated from each other in the width direction of the electric vehicle 100, and each of the extension portions 143A and 143B has a width significantly smaller than that of the main body portion 141 of the protector 14. A tip of each of the extension portions 143A and 143B has a fixing point for fixing the protector 14 to the case 13. That is, the protector 14 is fixed to the front surface 133 of the case 13 by the fixing members such as bolts at the tips of the extension portions 143A and 143B, that is, at the two fixing points separated from each other in the vehicle width direction on the front surface 133 of the case 13. The extension portions 143A and 143B are bent at the parts where the chamfered portion 131 and the front surface 133 of the case 13 are connected, and the protector 14 has beads 145 at the bent portions.

By bending the extension portions 143A and 143B in this way, when the fan motor 32 interferes with the protector 14 due to a collision or the like of the vehicle and a load is applied to the protector 14, deformation occurs in the bent portions of the extension portions 143A and 143B, and the collision energy is absorbed thereby. If the bent portions are deformed, even in a case where a component or the like having a protrusion interferes with the case 13, the component or the like is likely to come into surface contact with the case 13 instead of edge contact, and the load applied to the case 13 can be reduced. Therefore, damage to the case 13 can be further prevented.

Since the extension portions 143A and 143B are configured to be significantly narrower than the main body portion 141 of the protector 14, the bent portions are more easily deformed. Therefore, the effect of absorbing the collision energy and the effect of reducing the load applied to the case 13 are more easily obtained.

Since the extension portions 143A and 143B are bent at the parts where the chamfered portion 131 and the front surface 133 of the case 13 are connected, the bent portions are more easily deformed when a load is applied to the protector 14 than when the extension portions 143A and 143B are bent at other parts. Therefore, the effect of absorbing the collision energy and the effect of reducing the load applied to the case 13 are still more easily obtained.

Note that in the present embodiment, the protector 14 is fixed to the case 13 at the two separated fixing points 41 on the upper surface 132 of the case 13 and the two separated fixing points on the front surface 133 of the case 13, but the present invention is not necessarily limited thereto. For example, three or more fixing points for fixing the protector 14 to the case 13 may be provided on the upper surface 132 and the front surface 133 of the case 13. It is preferable that two or more fixing points are provided on each of the upper surface 132 and the front surface 133 of the case 13, but the present invention is not necessarily limited thereto, and the upper surface 132 and the front surface 133 of the case 13 may each be provided with only one fixing point.

According to the electric vehicle 100 of the above-described embodiment, the following effects can be obtained.

In the electric vehicle 100, the metal pipe (refrigerant pipe) 21 having a circular cross section is disposed to extend in the width direction of the electric vehicle 100 between the inverter 12 and the radiator 3 disposed in front of the inverter 12 in the electric vehicle 100. The case 13 of the inverter 12 has the chamfered portion 131 formed by chamfering the corner portion positioned at the front upper portion thereof, and the fan 31 of the radiator 3 is disposed such that the rotation shaft 311 of the fan 31 extends in the front-rear direction of the electric vehicle 100 at a position in front of the metal pipe (refrigerant pipe) 21. As described above, since the metal pipe (refrigerant pipe) 21 is disposed between the inverter 12 and the radiator 3, when the fan motor 32 of the radiator 3 interferes with the inverter 12 due to a collision or the like of the vehicle, the fan motor 32 first interferes with the metal pipe (refrigerant pipe) 21. Here, since the metal pipe (refrigerant pipe) 21 is made of metal and will not be broken as a rubber pipe, and since the metal pipe (refrigerant pipe) 21 has a circular cross section, the fan motor 32 can be moved to the rear side or the upper side of the electric vehicle in a slidable manner on the metal pipe 21. Since the chamfered portion 131 is provided on the front upper portion of the case 13 of the inverter 12 and the fan 31 (fan motor 32) of the radiator 3 is disposed in front of the inverter 12, when the fan motor 32 of the radiator 3 interferes with the inverter 12 due to a collision or the like of the vehicle, the fan motor 32 interferes with the chamfered portion 131 of the case 13 and moves to the rear side or the upper side of the electric vehicle 100 in a slidable manner on the upper surface 132 of the case 13 from the chamfered portion 131. That is, in the electric vehicle 100, during a collision or the like of the vehicle, the fan motor 32 first interferes with the metal pipe (refrigerant pipe) 21, interferes with the chamfered portion 131 of the case 13 from above the metal pipe (refrigerant pipe) 21, and further moves to the rear side or the upper side of the electric vehicle 100 in a slidable manner on the upper surface 132 of the case 13. Therefore, the collision energy generated when the fan motor 32 interferes with the case 13 of the inverter 12 can be reduced, and damage to the case 13 of the inverter 12 and the fan motor 32 can be prevented. Therefore, it is possible to prevent emergency stop (ES) and abnormal ignition (TI) during a collision of the vehicle.

Further, since the collision stroke can be ensured by an amount corresponding to the chamfering of the case 13, the collision energy generated when the fan motor 32 interferes with the case 13 of the inverter 12 is further reduced, and the damage to the case 13 of the inverter 12 and the fan motor 32 can be further prevented.

In the electric vehicle 100, the protector 14 is provided on the case 13 of the inverter 12 so as to cover the chamfered portion 131. Accordingly, when the fan motor 32 of the radiator 3 interferes with the inverter 12 due to a collision or the like of the vehicle, the fan motor 32 interferes with the protector 14, and therefore, the collision energy generated when the fan motor 32 interferes with the inverter 12 is further reduced. Therefore, the case 13 of the inverter 12 and the fan motor 32 can be further prevented from being damaged.

In the electric vehicle 100, the protector 14 is fixed to the case 13 at the two separated fixing points 41 on the upper surface 132 of the case 13 of the inverter 12. Accordingly, when the fan motor 32 of the radiator 3 interferes with the inverter 12 due to a collision or the like of the vehicle, the load applied to the fixing points 41 is dispersed to two points. Therefore, the collision energy is further reduced, and damage to the case 13 of the inverter 12 and the fan motor 32 can be further prevented.

In the electric vehicle 100, the protector 14 includes the long holes 144 extending in the front-rear direction of the electric vehicle 100 at the fixing points 41 on the upper surface 132 of the case 13, and is fixed to the case 13 by the fixing members via the long holes 144. Accordingly, when the fan motor 32 of the radiator 3 interferes with the protector 14 during a collision or the like of the vehicle, the protector 14 can be made to slide in the long holes 144, so that the collision energy generated when the fan motor 32 interferes with the case 13 can be received by the corner portions of the case 13 having high rigidity. Therefore, the damage to the case 13 of the inverter 12 can be further prevented.

In the electric vehicle 100, the case 13 of the inverter 12 includes the boss portions 135 protruding to the outside of the case 13 at the fixing points 41, the protector 14 is fixed to the boss portions 135 by the bolts 51, and the boss portions 135 each include the rib 136 at the same height as the tip portion 513 of the bolt 51 or at a height closer to the upper surface 132 of the case 13 than the tip portion 513. Accordingly, when the fan motor 32 interferes with the protector 14 due to a collision or the like of the vehicle, the case 13 (boss portion 135) is broken at a portion of the boss portion 135 that does not include the rib 136 and near the tip portion 513 of the bolt 51 that is not supported by the bolt 51 and has low rigidity. Therefore, stress generated at the root portion of the boss portion 135 can be reduced, and damage to a portion connected to the inside of the case 13 can be prevented. That is, the damage to the case 13 can be further prevented.

In the electric vehicle 100, the protector 14 has the extension portions 143A and 143B extending from the chamfered portion 131 of the case 13 toward the front surface 133, the extension portions 143A and 143B have the fixing points at the tips thereof, and the protector 14 is fixed to the case 13 at the fixing points. The extension portions 143A and 143B are bent at the parts where the chamfered portion 131 and the front surface 133 of the case 13 are connected. By bending the extension portions 143A and 143B in this way, when the fan motor 32 interferes with the protector 14 due to a collision or the like of the vehicle and a load is applied to the protector 14, deformation occurs in the bent portions of the extension portions 143A and 143B, and the collision energy is absorbed thereby. Therefore, the damage to the case 13 of the inverter 12 can be further prevented.

Since the extension portions 143A and 143B are bent at the parts where the chamfered portion 131 and the front surface 133 of the case 13 are connected, the bent portions are more easily deformed when a load is applied to the protector 14 than when the extension portions 143A and 143B are bent at other parts. Therefore, the effect of absorbing the collision energy is more easily obtained.

In the electric vehicle 100, the case 13 of the inverter 12 has the chamfered portion 131 formed by chamfering the corner portion positioned at the front upper portion thereof, and the fan 31 of the radiator 3 is disposed such that the rotation shaft 311 of the fan 31 extends in the front-rear direction of the electric vehicle 100 at a position in front of the metal pipe (refrigerant pipe) 21 disposed between the inverter 12 and the radiator 3. The inverter 12 is disposed above the rotary electric machine 11 in a state of being inclined downward toward the front side of the electric vehicle 100. Accordingly, the surface of the chamfered portion 131 faces the radiator 3. Therefore, when the fan motor 32 of the radiator 3 interferes with the inverter 12 due to a collision or the like of the vehicle, the fan motor 32 interferes with the chamfered portion 131 and moves in a slidable manner on the upper surface 132 of the case 13 from the chamfered portion 131. That is, the collision energy generated when the fan motor 32 collides with the inverter 12 can be reduced, and the fan motor 32 can be moved to the rear side or the upper side of the electric vehicle 100.

Note that in the present embodiment, the electric vehicle 100 is a series hybrid vehicle, but is not limited thereto, and may be other hybrid vehicles, electric automobiles, or the like.

In the present embodiment, the case 13 accommodates the rotary electric machine 11 and the inverter 12, but the present invention is not necessarily limited thereto. For example, a case that accommodates the rotary electric machine 11 and a case that accommodates the inverter 12 may be separately provided, and the case that houses the inverter 12 may be disposed above the case that accommodates the rotary electric machine 11.

In the present embodiment, the rotary electric machine 11 accommodated in the case 13 includes the generator 11A and the electric motor 11B, but the present invention is not limited thereto, and for example, the rotary electric machine 11 accommodated in the case 13 may be configured only by an electric motor (drive motor) capable of generating regenerative electric power.

In the present embodiment, the refrigerant pipe 2 is a refrigerant flow path through which the refrigerant for cooling the inverter 12 flows, but the present invention is not necessarily limited thereto, and the refrigerant pipe 2 may be a refrigerant flow path through which a refrigerant for cooling components other than the inverter 12 flows. For example, the refrigerant pipe 2 may be a refrigerant flow path through which a refrigerant for cooling a high-voltage component such as a charger or an engine flows.

As in the present embodiment, it is preferable that the extension portions are provided at the upper portion and the lower portion of the protector 14, but the present invention is not necessarily limited thereto, and the protector 14 may not be provided with any extension portion. In the present embodiment, a configuration is adopted in which one extension portion 142 is provided at the upper portion of the protector 14, and two extension portions 143A and 143B are provided at the lower portion of the protector 14, but the numbers of extension portions at the upper portion and the lower portion of the protector 14 are not limited thereto.

As in the present embodiment, the protector 14 is preferably provided in the case 13 that accommodates the inverter 12, but the present invention is not necessarily limited thereto, and the protector 14 may not be provided.

Further, as in the present embodiment, the inverter 12 is preferably inclined downward toward the front side of the electric vehicle 100, but the present invention is not necessarily limited thereto, and the inverter 12 may not be inclined.

Although the embodiment of the present invention has been described above, the above embodiment merely exemplifies a part of application examples of the present invention and does not intend to limit the technical scope of the present invention to the specific configurations of the above embodiments.

## Claims

1. An electric vehicle, comprising:
a rotary electric machine;
an inverter; and
a radiator, wherein
the inverter is disposed above the rotary electric machine,
the radiator is disposed in front of the inverter in the electric vehicle,
a refrigerant pipe made of metal and having a circular cross section is disposed between the inverter and the radiator and extends in a width direction of the electric vehicle,
a case of the inverter has a chamfered portion formed by chamfering a corner portion positioned at a front upper portion of the electric vehicle, and
the radiator includes a fan that rotates around a rotation shaft, and the fan is disposed such that the rotation shaft extends in a front-rear direction of the electric vehicle at a position in front of the refrigerant pipe.

2. The electric vehicle according to claim 1, wherein
the case includes a protector that covers the chamfered portion.

3. The electric vehicle according to claim 2, wherein
the protector is fixed to the case at least at two fixing points separated from each other on an upper surface of the case.

4. The electric vehicle according to claim 3, wherein
the protector is provided with a long hole extending in the front-rear direction of the electric vehicle at each of the fixing points on the upper surface of the case, and is fixed to the case by a fixing member via each of the long holes.

5. The electric vehicle according to claim 3, wherein
the case includes a boss portion protruding outside the case at each of the fixing points,
the protector is fixed to the boss portion by a bolt, and
the boss portion is provided with a rib at a position at the same height as a tip portion of the bolt or at a height higher than the tip portion toward the upper surface of the case.

6. The electric vehicle according to claim 3, wherein
the protector includes an extension portion extending from the chamfered portion toward a front surface of the case,
the extension portion has at least two fixing points separated from each other in a vehicle width direction at a tip thereof,
the protector is fixed to the case at the fixing points, and
the extension portion is bent at a portion where the chamfered portion and the front surface of the case are connected.

7. The electric vehicle according to any one of claims 1 to 6, wherein
the inverter is disposed above the rotary electric machine in a state of being inclined downward toward a front side of the electric vehicle.
